Europäisches Patentamt

European Patent Office

Office européen des brevets

(11) Numéro de publication : **0 101 691**
**B1**

(12) **FASCICULE DE BREVET EUROPÉEN**

(45) Date de publication du fascicule du brevet :
**30.12.86**

(21) Numéro de dépôt : **83900492.6**

(22) Date de dépôt : **04.02.83**

(86) Numéro de dépôt international :
**PCT/FR 83/00024**

(87) Numéro de publication internationale :
**WO/8302985 (01.09.83 Gazette 83/20)**

(51) Int. Cl.⁴ : **F 16 D 41/08**, F 16 D 15/00,
F 16 D 45/00

(54) DISPOSITIF DE COMMANDE D'UN ACCOUPLEMENT A ROUE LIBRE DE SECURITE POUR VEHICULE AUTOMOBILE.

(30) Priorité : **23.02.82 FR 8202940**

(43) Date de publication de la demande :
**07.03.84 Bulletin 84/10**

(45) Mention de la délivrance du brevet :
**30.12.86 Bulletin 86/52**

(84) Etats contractants désignés :
**DE FR GB SE**

(56) Documents cités :
**CH-A- 397 585**
**DE-C- 576 907**
**FR-A- 2 428 179**
**US-A- 1 983 250**
**US-A- 2 144 160**
**US-A- 3 788 435**
**US-A- 3 949 848**
**US-A- 4 111 288**

(73) Titulaire : **MALHERBE, André**
**15 rue de Gastines Cedex 628**
**F-41500 Suèvres (FR)**

**BURGHELLE, Pierre**

**F-37400 Amboise Nazelles (FR)**

(72) Inventeur : **MALHERBE, André**
**15, rue de Gastines Cedex 628**
**F-41500 Suèvres (FR)**

(74) Mandataire : **Mohnhaupt, Dietrich et al**
**DIETLIN, MOHNHAUPT & Cie S.A. Rue des Epinettes 19**
**CH-1227 Genève (CH)**

Jouve, 18, rue St-Denis, 75001 Paris, France

## Description

La présente invention a pour objet un dispositif de commande d'un accouplement à roue libre de sécurité, adapté pour être monté sur un arbre de transmission d'un véhicule automobile.

On a déjà proposé un certain nombre de dispositifs d'accouplement à roue libre, destinés soit à des machines-outils, soit à des véhicules automobiles.

Ainsi le document FR-A-1 157 423 (RENAULT) décrit un système d'accouplement à roue libre qui ne peut être enclenché à toutes les vitesses, et dont l'enclenchement est uniquement manuel et non pas automatique. Ce dispositif prévu normalement pour une machine-outil, est trop encombrant pour être monté sur un arbre de transmission nu, et est de ce fait inadaptable sur l'arbre de transmission d'un véhicule automobile. C'est pourquoi il est en fait abandonné.

Le document US-A-3 788 435 a pour objet un système à roue libre, mais qui se déclenche seulement à partir d'une certaine vitesse et est donc dangereux. De plus aucune sécurité n'est prévue dans ce dispositif.

Le document US-A-2 012 087 a trait à un dispositif d'accouplement de deux arbres pour machines-outils, permettant le désaccouplement dans un seul sens. Ce dispositif extrêmement encombrant est inadaptable sur un arbre de véhicule automobile.

Le document US-A-2 283 965 a pour objet un système d'accouplement de deux arbres qui ne peut assurer cet accouplement que dans un seul sens de rotation.

Or, dans un système d'accouplement à roue libre pour véhicule automobile il est indispensable que l'accouplement puisse se faire dans les deux sens de rotation.

Le document DE-C-576 907 décrit un tel type d'accouplement à roue libre par coincement de rouleaux dans lequel la commande est basée sur le freinage constant d'un tambour tournant qui par son déplacement relatif assure l'introduction d'un verrou dans une fente d'un disque assurant la limitation du déplacement de la cage contenant les rouleaux. Un tel dispositif ne permet pas d'obtenir directement l'effet de roue libre lors de décélération en marche avant, celle-ci n'est possible qu'après une courte accélération préalable, ce dispositif n'est donc pas automatique, de plus il ne présente pas de sécurité en cas de vitesse excessive et enfin un tel dispositif de par le système à friction constant, entraîne échauffement et usure, nécessitant carter d'huile de refroidissement ce qui ne permet pas la mise en place directement sur un arbre de roue.

L'invention a pour but de proposer un dispositif de commande d'accouplement à roue libre pour véhicule automobile qui soit de construction relativement simple, peu encombrant et par conséquent aisé a monter sur un arbre de transmission nu, et d'un fonctionnement parfaitement fiable. En particulier, l'invention a pour but de réaliser un dispositif de commande qui permette de réaccoupler automatiquement la roue du véhicule à l'arbre de transmission associé à partir d'une certaine vitesse en marche avant, et ce pour des raisons de sécurité évidentes. L'invention vise également à permettre le rétablissement automatique du frein moteur en même temps que le réaccouplement des deux arbres lors du freinage, sans intervention du conducteur.

L'intérêt des accouplements à roue libre visés par l'invention consiste essentiellement dans l'économie substantielle de carburant procurée par ces dispositifs à faible vitesse, donc principalement pendant la conduite en agglomération, grâce à la récupération de l'inertie du véhicule.

Mais du fait que l'adhérence entre les roues du véhicule et le sol est considérablement diminuée lorsque les roues sont désaccouplées de leurs arbres d'entraînement, on comprend aisément que la sécurité du conducteur exige un réaccouplement de la roue et de l'arbre de transmission instantané à partir d'une certaine vitesse prédéterminée et en cas de freinage, tout en assurant la récupération du frein moteur.

L'invention vise un dispositif de commande d'un accouplement à roue libre adapté pour être monté sur un arbre de transmission d'un véhicule automobile entre une première partie menante de cet arbre et une seconde partie menée dudit arbre entraînant une roue, comportant des moyens pour accoupler l'arbre menant et l'arbre mené dans les deux sens de rotation de ceux-ci et pour désaccoupler l'arbre menant et l'arbre mené dans le sens de rotation correspondant à la marche avant, comprenant un verrou monté coulissant dans une cloche solidaire de l'arbre menant, apte à venir s'introduire dans une cage logée à l'intérieur de la cloche et susceptible d'osciller dans celle-ci entre deux positions limites dans lesquelles elle est en butée contre les bossages de la cloche et rend solidaires en rotation dans les deux sens l'arbre mené et l'arbre menant, la présente invention est caractérisée en ce que des moyens sont prévus pour introduire automatiquement le verrou dans la cage lorsque le véhicule est en marche avant et pour maintenir ce verrou dans une position médiane entre les deux positions limites précitées quand le conducteur n'accélère pas et ne freine pas, de sorte que l'arbre mené est alors désaccouplé de l'arbre menant et est donc en roue libre, comprenant un électroaimant logé dans la cloche et relié à un contact électrique fixé à la pédale de frein qui en assure l'alimentation et par conséquent déclenche l'introduction du verrou dans la cage et l'y maintient tant que le conducteur n'appuie pas sur la pédale de frein, et ainsi qu'un système de sécurité apte à escamoter automatiquement le verrou de la cage oscillante à partir d'une vitesse prédéterminée en marche avant, lors du freinage et en marche arrière, ce qui réaccouple lesdits arbres, ce système de sécurité comprenant d'une part une masselotte fixée à un support articulé sur un axe solidaire de la cloche, ce support comprenant un bras pivotant dont une extrémité est solidarisée avec le verrou, afin de pouvoir escamoter automatiquement celui-ci de la cage, lorsque sous l'effet de la force centrifuge à partir de ladite vitesse prédéterminée, la masselotte s'écarte de sa position initiale en faisant pivoter le bras sur l'axe avec une force supérieure à la force de sens opposée exercée sur le verrou par l'électroaimant et équipé d'autre part d'un organe de rappel automatique du verrou en position escamotée lorsque le véhicule est à l'arrêt et que le contact est coupé, par exemple un ressort, ou bien est équipé d'un contact électronique monté sur le câble de compteur du véhicule et déclenchant une coupure de courant, et enfin comprenant pour escamoter le verrou en marche arrière un relai branché sur la commande d'un phare de recul qui coupe automatiquement l'alimentation de l'électroaimant lors de la mise en marche arrière.

Suivant une particularité de l'invention la cloche présente entre ses bossages intérieurs des secteurs angulaires creux, adaptés pour recevoir, avec jeu des galets encastrés dans des logements correspondants de la cage dans laquelle l'arbre mené est monté coaxialement de façon que lorsque les galets sont dans ces creux un jeu soit créé entre la cage, d'une part, la cloche et l'arbre mené, d'autre part, ce dernier étant donc alors désaccouplé de l'arbre menant, tandis que lorsque les galets viennent en butée contre les bossages dans l'un ou l'autre sens de la rotation, la cage entraînée par l'arbre mené vient en butée contre la cloche et réaccouple en rotation l'arbre mené, et l'arbre menant selon une autre caractéristique, la cage présente un trou de réception du verrou coulissant agencé de telle sorte que lorsque ce dernier est engagé dans les trous et que l'arbre menant tourne moins vite que l'arbre mené, le véhicule étant en marche avant, ledit verrou bloque la cage en rotation ainsi que les galets encastrés dans celle-ci, en maintenant ces derniers dans des secteurs angulaires creux formés dans la cage, de telle sorte que l'arbre mené est désaccouplé de l'arbre menant et que la roue associée est libre.

Selon encore une autre particularité de l'invention le verrou est une tige logée à l'intérieur de la cloche parallélement à l'axe des arbres menant et mené de façon à pouvoir s'engager dans un trou oblong ménagé dans la cage oscillante sur un secteur angulaire correspondant au débattement angulaire de la cage et des galets entre la position roue libre et la position de réaccouplement en rotation des arbres menant et mené en marche avant.

En raison de la rotation plus rapide de l'arbre mené solidaire de la roue, provoquée par l'inertie de la voiture par exemple en descente ou en lachant l'accélérateur, le désaccouplement des deux arbres est rendu automatique car l'arbre mené entraine la cage et les galets en rotation, mais cette rotation est limitée par le verrou qui vient en butée contre une extrémité d'un trou oblong approprié, ménagé dans la cage.

Il en résulte de l'exposé de ces caractéristiques que par rapport aux dispositifs antérieurs le dispositif selon l'invention grâce à son fonctionnement automatique permet d'atteindre une sécurité d'utilisation non encore proposée.

D'autres caractéristiques et avantages de l'invention apparaîtront au cours de la description qui va suivre, faite en référence aux dessins annexés sur lesquels on a représenté une forme de réalisation non limitative de l'invention.

La figure 1 est une vue en élévation schématique d'une roue de véhicule et de son arbre d'entraînement pourvu d'un dispositif de commande d'accouplement à roue libre selon l'invention.

La figure 2 est une vue en coupe longitudinale axiale suivant II-II de la figure 4 d'un mode de réalisation du dispositif de commande d'accouplement visé par l'invention.

La figure 3 est une vue en coupe transversale de détail suivant III-III de la figure 2.

La figure 4 est une vue en coupe transversale du dispositif suivant IV-IV de la figure 2.

La figure 5 est une vue en élévation latérale de la cage oscillante faisant partie du dispositif des figures 2 à 4, et des galets encastrés dans cette cage.

La figure 6 est une vue en élévation schématique illustrant la commande du dispositif d'accouplement par l'intermédiaire de la pédale de frein du véhicule.

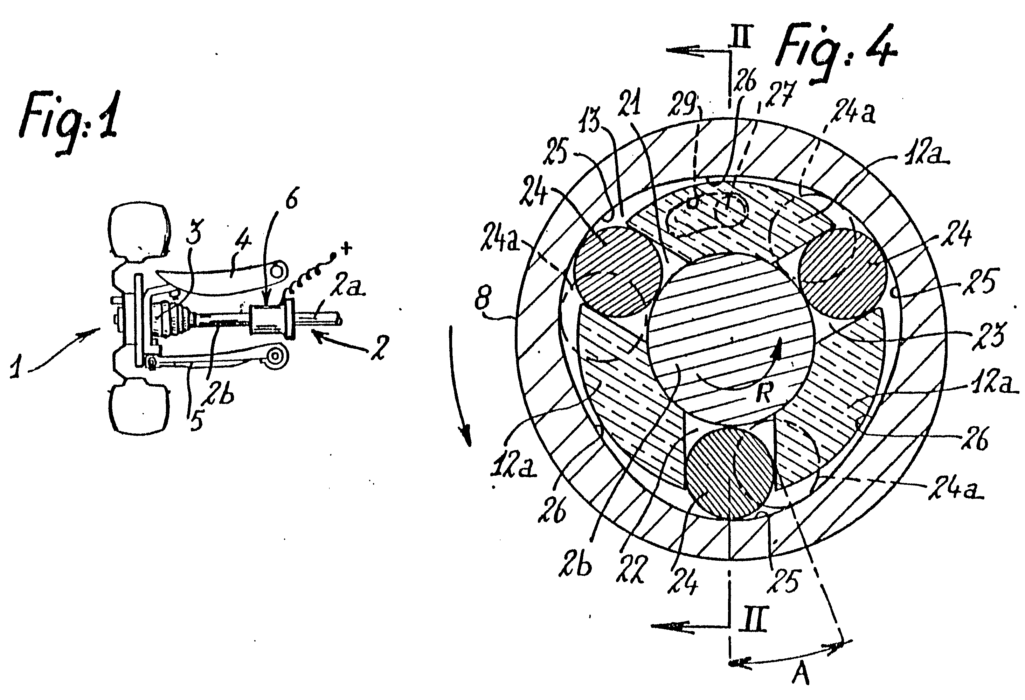

On a représenté à la figure 1 une roue 1 de véhicule automobile, son arbre 2 de transmission pourvu d'un cardan 3, la roue 1 étant équipée de deux bras 4, 5 de suspension.

L'arbre d'entraînement 2 est muni d'un dispositif d'accouplement 6 à roue libre, permettant de désaccoupler la partie menante 2a de l'arbre 2 de la partie menée 2b, et ce uniquement en marche avant du véhicule pour des raisons de sécurité.

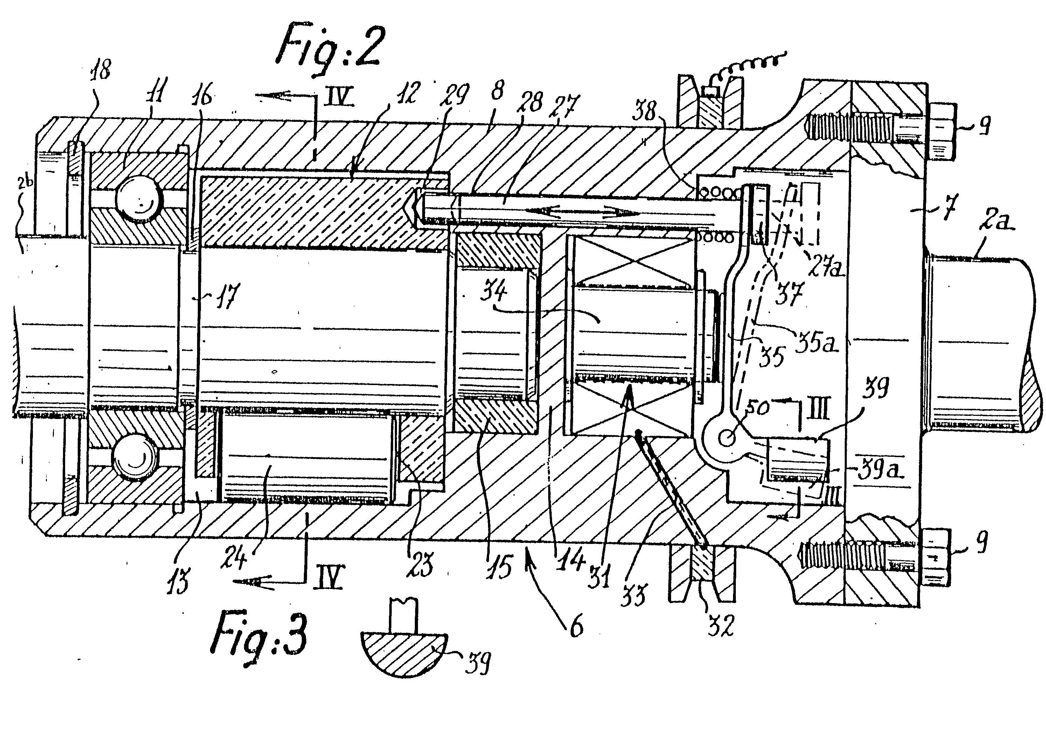

On décrira le dispositif d'accouplement 6 et son système de commande en se référant aux figures 2 à 6.

L'extrémité de l'arbre menant 2a est encastrée dans une plaque 7 et fixée à celle-ci par soudure. La plaque 7 est solidarisée avec une cloche cylindrique 8 par l'intermédiaire de plusieurs boulons 9, l'arbre mené 2b ayant son extrémité engagée axialement dans la cloche 8. Dans celle-ci est monté, du côté opposé à l'arbre menant 2a, un roulement à billes 11 de centrage de l'arbre mené 2b, ainsi qu'une cage 12 dans un logement 13 de la cloche 8, l'arbre mené 2b traversant axialement la cage 12 au-delà de laquelle son extrémité vient en butée contre une cloison transversale 14. Entre la cage 12 et la cloison 14, l'extrémité de l'arbre mené est centrée dans une bague 15. Un circlip 16 introduit dans une gorge annulaire 17 de l'arbre 2b est intercalé entre la cage 12 et le roulement 11, tandis qu'un circlip 18 encastré dans l'extrémité de la cloche 8 maintient en place le roulement 11.

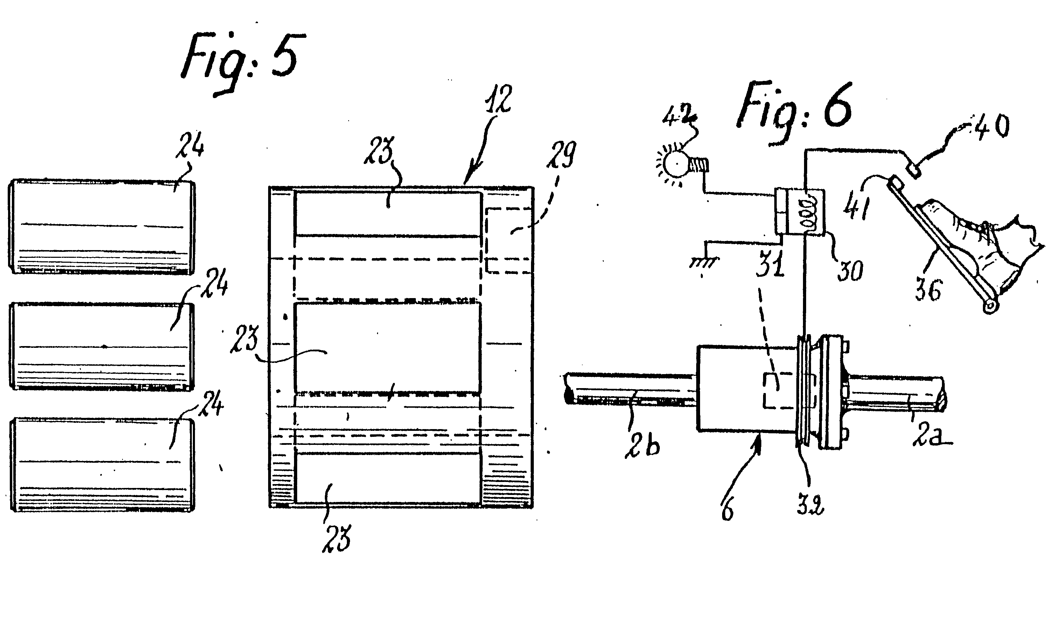

La cage 12, de contour circulaire, est montée avec jeu à l'intérieur du logement 13 comme on le voit aux figures 2 et 4.

Cette cage comporte trois évidements longitudinaux 21, 22, 23 dont les axes, parallèles à l'axe des arbres 2a et 2b, sont équidistants de 120 degrés. Dans chaque évidement 21 est disposé un galet 24, tandis que les sections de paroi 12a s'étendant entre deux galets 24 consécutifs présentent des bords intérieurs dont le rayon de courbure est égal à celui de l'arbre mené 2b sur lequel la cage 12 vient ainsi en prise.

Par ailleurs, la paroi intérieure du logement 13 a une surface profilée en came de façon à présenter trois creux équidistants 25 et trois bossages équidistants 26, intercalés entre les creux 25 et ayant un rayon de courbure sensiblement supérieur à ces derniers. Les trois creux 25 s'étendent sur une demi-circonférence de même que les trois bossages 26, l'ensemble constituant une surface de came sur laquelle les galets 24 et la cage 12 peuvent osciller avec jeu. En effet, l'ensemble constitué par la cage 12 et ses galets de roulement 24 peut dans ces conditions prendre deux positions angulaires limites :

a) Une première position représentée en traits pleins à la figure 4, dans laquelle les galets 24 sont dans les creux 25 et les secteurs 12a sont en regard des bossages 26, mais avec un jeu entre ces derniers et les secteurs 12a. Dans ces conditions, on comprend que l'arbre mené 2b est désaccouplé en rotation de la cloche 8 et par conséquent de l'arbre menant 2a, la roue correspondante 1 étant donc libre.

b) Une seconde position angulaire indiquée par les galets figurés en traits mixtes 24a (figure 4), distante de la position précédente d'un secteur angulaire de 12 à 15 degrés environ, dans laquelle les galets 24a ainsi que les secteurs intercalaires 12a viennent en butée contre les bossages ou cames 26. La cage 12 et les galets 24 peuvent venir dans cette position de butée contre la cloche 8 dans un sens de rotation ou dans l'autre à partir de la position en traits continus de la figure 4, une seule de ces positions limites ayant été représentée (galets 24a).

Dans l'une ou l'autre de ces deux positions symétriques par rapport à la position des galets 24, la cage 12 est appliquée à la fois contre l'arbre mené 2b et contre la cloche 8, de sorte que l'accouplement en rotation des arbres 2a et 2b est alors réalisé dans l'un ou l'autre des deux sens de rotation.

Suivant l'invention, le dispositif d'accouplement comprend un verrou 27 constitué par une tige pouvant coulisser à l'intérieur de la cloche 8, parallèlement à l'axe de celle-ci et des arbres 2a, 2b, dans un logement 28 ménagé entre la cage 12 et l'arbre 2a. La partie terminale du verrou 27 peut venir s'introduire dans un trou oblong 29, sensiblement en forme de haricot, formé dans la cage 12 entre deux évidements 21 (figure 4). Le trou 29 s'étend sur un secteur angulaire correspondant au débattement angulaire A de la cage 12 et des galets 24 entre la position « roue libre » figurée en traits mixtes à la figure 4, et la position de réaccouplement en rotation des arbres menant 2a et mené 2b en marche avant, figurée par les galets en traits mixtes 24a. Le verrou 27 peut prendre une première position illustrée en traits pleins à la figure 1, dans laquelle son extrémité est introduite dans le trou 29 de la cage 12, et une seconde position escamotée 27a, dans laquelle l'extrémité du verrou est retirée du trou 29, et ce par coulissement dans le logement 28.

L'invention prévoit des moyens de commande automatique de la position du verrou 27, qui comprennent dans l'exemple représenté, un électroaimant 31 disposé axialement dans la cloche 8 entre la cloison 14 et la plaque 7, dans un logement central de la cloche 8. L'électroaimant 31 est relié à un collecteur 32 par des connexions électriques 33 traversant la cloche 8. Le collecteur 32 est relié d'une part à un contact 40 (figure 6) sur lequel vient s'appliquer un second contact 41 fixé à l'extrémité de la pédale de frein 36, et d'autre part à un relais 30 connecté à la commande d'un phare de recul 42. De ce fait, les contacts 40 et 41 sont appliqués l'un sur l'autre lorsque la pédale 36 est relevée c'est-à-dire lorsque le conducteur ne freine pas, et d'autre part le relais 30 est adapté pour couper automatiquement l'alimentation de l'électroaimant 31 lorsque le véhicule est mis en marche arrière.

L'électroaimant 31 peut être constamment alimenté en courant électrique par la batterie du véhicule au moyen de liaisons non représentées, de sorte qu'une fois le contact moteur mis, un courant passe en permanence dans l'électroaimant 31 sauf lorsque le conducteur appuie sur la pédale de frein 36 ou passe en marche arrière.

La liaison de commande entre le noyau 34 de l'électroaimant et le verrou 27 est constituée par un bras 35 s'étendant en regard du noyau 34, et monté à pivotement autour d'un axe 50 solidaire de la cloche 8. L'extrémité du verrou 27 traverse la partie terminale du bras 35 à laquelle elle est assujettie par une collerette terminale 37 de retenue. Lorsque le courant passe dans l'électroaimant 31, le noyau 34 attire le bras métallique 35 qui pivote alors autour de l'axe 50 et fait coulisser le verrou 27 jusqu'à ce que ce dernier vienne s'introduire dans le trou oblong 29.

Inversement, lorsqu'aucun courant ne passe dans l'électroaimant 31, un ressort de rappel 38 disposé coaxialement autour du verrou 27 en appui sur la cloche 8, exerce une poussée sur le bras 35. Le verrou 27 est escamoté à l'extérieur du trou 29 jusqu'à sa position 27a, le bras 35 ayant pivoté corrélativement jusqu'à sa position 35a. De ce fait, les arbres 2a et 2b peuvent se réaccoupler automatiquement grâce à l'action de rappel du ressort 38, qui constitue ainsi une première commande de sécurité.

Au delà de l'axe 50, le bras 35 se prolonge par une masselotte 39 qui tend à s'écarter de sa position initiale représentée en traits pleins (figure 2) sous l'effet de la force centrifuge pendant la rotation de l'arbre 2a. La masselotte 39 peut ainsi pivoter jusqu'à sa position 39a, en faisant alors pivoter le bras 35 autour de l'axe 50, pivotement qui entraîne l'extraction du verrou 27 du trou oblong 29, jusqu'à la position escamotée 27a correspondant à l'écartement maximum 39a de la masselotte 39.

Cependant, l'extraction complète du verrou 27 du trou 29 n'est réalisée qu'à une certaine vitesse prédéterminée, par exemple 80 km/h. Cette extraction provoquant un réaccouplement automatique de l'arbre menant 2a et de l'arbre mené 2b à partir de cette vitesse, constitue une deuxième commande de sécurité.

Le couple d'extraction du verrou 27 créé par la rotation de la masselotte 39 est de même sens que la force de rappel exercée sur le verrou 27 par le ressort 38 auquel il s'ajoute, mais le sens opposé à la force d'attraction exercée sur le bras 35 par l'électroaimant 31. Par conséquent, pour que l'extraction du verrou 27 soit effective, il faut que la force totale produite par le déplacement de la masselotte 39 et la force de rappel du ressort 38 soit supérieure à la force antagoniste exercée par l'électroaimant 31 sur le bras 35, ce qui peut être réalisé par un réglage approprié de ces différents éléments, pour une vitesse prédéterminée.

Le fonctionnement de l'accouplement qui vient d'être décrit est le suivant.

1. A l'arrêt du véhicule, le contact étant coupé, aucun courant ne passe dans l'électroaimant 31, de sorte que le ressort de rappel 38 maintient le verrou 27 en position escamotée à l'extérieur du trou oblong 29 (position 27a). Ceci assure une sécurité pour le stationnement du véhicule qui peut ainsi être mis en prise.

2. Lorsque le véhicule est mis en marche avant, et que le conducteur n'appuie pas sur la pédale de frein 36, l'électroaimant 31 est alimenté et provoque donc comme expliqué ci-dessus, l'introduction du verrou 27 dans le trou oblong 29. Lorsque le conducteur accélère, tout en restant au-dessous de la vitesse prédéterminée mentionnée ci-dessus, (par exemple 80 km/h), l'arbre menant 2a et la cloche 8 tournent tout d'abord dans le sens anti-horaire par rapport à l'arbre mené 2b, en entraînant le verrou 27. Ce dernier exécute donc un déplacement angulaire dans le trou 29 à partir de sa position figurée en traits interrompus à la figure 4, jusqu'à une seconde position voisine de l'extrémité opposée du trou oblong 29. Au terme de la rotation relative ainsi effectuée entre les arbres 2a et 2b, la cage 12 et les galets 24 sont en prise avec la cloche 8 dans leur position limite opposée à la position 24a, et assurent de ce fait l'accouplement automatique entre l'arbre mené 2b et l'arbre menant 2a comme expliqué ci-dessus. A faible vitesse, l'action de la masselotte d'inertie 39 est insuffisante pour provoquer l'escamotage du verrou 27.

Lorsque le conducteur relâche sa pression sur l'accélérateur, sans toutefois freiner, l'arbre menant 2a tourne moins vite que l'arbre mené 2b (qui tourne dans le sens de la flèche R). De ce fait, le verrou 27 parcourt le trou 29 en sens inverse et revient dans sa position initiale figurée en traits interrompus à la figure 4, dans laquelle il maintient les galets 24 et la cage 12 dans leur position intermédiaire entre les deux positions limites d'accouplement. Dans cette position intermédiaire, les arbres 2a et 2b sont désaccouplés comme on l'a expliqué précédemment, et la roue correspondante est donc libre.

3. Lorsque le conducteur appuie sur la pédale de frein 36, le contact 41 s'écarte du contact 40 et l'électroaimant 31 n'est plus alimenté, de sorte que le ressort 38 rappelle automatiquement le verrou 27 à l'extérieur du trou 29 dans sa position escamotée 27a. De ce fait, les arbres 2a, 2b sont réaccouplés et en outre le frein moteur est rétabli.

4. Lorsque la vitesse dépasse la vitesse prédéterminée de sécurité, l'action de la masselotte 39 devient prépondérante et assure l'extraction du verrou 27 de la cage 12, et par conséquent le réaccouplement automatique des deux arbres 2a, 2b. Lorsque la vitesse décroît à nouveau au-dessous de la vitesse prédéterminée de sécurité, et que le conducteur ne freine pas, le dispositif rétablit automatiquement la mise en roue libre par réintroduction du verrou 27 dans le trou 29.

5. Lorsque le véhicule est en marche arrière, le relais 30 branché sur le phare de recul 40 coupe automatiquement l'alimentation de l'électroaimant 31, de sorte que le verrou 27 est escamoté hors de la cage 12 par le ressort de rappel 38. Les arbres 2a et 2b sont donc réaccouplés.

Par ailleurs, pour la sécurité du conducteur, les caractéristiques du dispositif sont déterminées de telle façon que le verrou 27 puisse être escamoté au-delà de la vitesse prédéterminée de sécurité, même si l'électroaimant 31 restait anormalement alimenté, et ce grâce à l'action de la masselotte d'inertie 39.

Le dispositif de commande selon l'invention est particulièrement aisé à monter sur un arbre de transmission nu. Pour cela il suffit de couper l'arbre et d'installer l'accouplement entre les parties menante 2a et menée 2b, l'arbre menant étant soudé à la cloche 8. Le montage de ce dispositif sur un véhicule ne nécessite donc aucune transformation des organes essentiels de celui-ci.

Par ailleurs, les divers organes prévus par l'invention pour escamoter automatiquement le verrou 27 de la cage 12 afin de permettre le réaccouplement automatique des arbres 2a et 2b, garantissent la sécurité du conducteur dans les différentes situations susceptibles de se présenter : dépassement de la vitesse prédéterminée en marche avant, freinage en marche avant, marche arrière.

On notera également que s'il se produit une coupure de courant accidentelle dans le circuit de l'électroaimant 31, le ressort 38 escamote automatiquement le verrou 27, ce qui accroît encore la sécurité du dispositif de commande.

Ce dispositif présente l'avantage d'être adaptable à tout véhicule existant, ainsi que de permettre le passage des vitesses sans débrayer lorsque le véhicule roule dans la gamme de vitesse où la roue libre agit en raison du débrayage permanent existant.

Le verrou 27 est agencé pour ne présenter aucune résistance au coulissement dans la cloche 8.

L'invention n'est pas limitée au mode de réalisation décrit et peut comporter des variantes d'exécution. Ainsi l'électroaimant 31 pourrait être placé à l'extérieur de la cloche 8, mais il serait alors nécessaire de prévoir des moyens de compensation du déséquilibrage du dispositif dû à la présence du balourd de cette masselotte. En variante, ce dispositif de balourd pourrait être remplacé par une commande électrique directe de l'électroaimant, par contact ouvert directement en fonction de la vitesse du véhicule de manière programmée ou non. Enfin, le relais 30 peut être remplacé par un contact transistorisé approprié, et on peut prévoir un contact électronique sur le câble de compteur du véhicule pour déclencher la coupure du courant à l'arrêt du véhicule.

**Revendications**

1. Dispositif de commande d'un accouplement à roue libre adapté pour être monté sur un arbre de transmission d'un véhicule automobile, entre une première partie menante (2a) de cet arbre et une seconde partie menée (2b) dudit arbre entraînant une roue (1), comportant des moyens pour accoupler l'arbre menant (2a) et l'arbre mené (2b) dans les deux sens de rotation de ceux-ci et pour désaccoupler l'arbre menant (2a) et l'arbre mené (2b) dans le sens de rotation correspondant à la marche avant, comprenant un verrou (27) monté coulissant dans une cloche (8) solidaire de l'arbre menant (2a), apte à venir s'introduire dans une cage (12) logée à l'intérieur de la cloche (8) et susceptible d'osciller dans celle-ci entre deux positions limites dans lesquelles elle est en butée contre des bossages (26) de la cloche (8) et rend solidaires en rotation dans les deux sens l'arbre mené (2b) et l'arbre menant (2a), caractérisé en ce que des moyens sont prévus pour introduire automatiquement le verrou (27) dans la cage (12) lorsque le véhicule est en marche avant et pour maintenir ce verrou dans une position médiane entre les deux positions limites précitées quand le conducteur n'accélère pas et ne freine pas, de sorte que l'arbre mené (2b) est alors désaccouplé de l'arbre menant (2a) et est donc en roue libre, ces moyens comprenant un électroaimant (31) logé dans la cloche (8) et relié à un contact électrique (35) fixé à la pédale de frein (36) qui en assure l'alimentation et par conséquent déclenche l'introduction du verrou (27) dans la cage (12) et l'y maintient tant que le conducteur n'appuie pas sur la pédale de frein, ainsi qu'un système de sécurité apte à escamoter automatiquement le verrou (27) de la cage oscillante (12) à partir d'une vitesse prédéterminée en marche avant, lors du freinage et en marche arrière, ce qui réaccouple lesdits arbres (2a, 2b), ce système de sécurité comprenant d'une part une masselotte (39) fixée à un support articulé sur un axe (50) solidaire de la cloche (8) ce support comprenant un bras pivotant (35) dont une extrémité est solidarisée avec le verrou (27), afin de pouvoir escamoter automatiquement celui-ci de la cage (12) lorsque sous l'effet de la force centrifuge à partir de ladite vitesse prédéterminée, la masselotte (39) s'écarte de sa position initiale en faisant pivoter le bras (35) sur l'axe (50) avec une force supérieure à la force de sens opposé exercée sur le verrou (27) par l'électroaimant (31) et équipée d'autre part d'un organe de rappel automatique (38) du verrou (27) en position escamotée lorsque le véhicule est à l'arrêt et que le contact est coupé, par exemple un ressort, ou bien est équipé d'un contact électronique monté sur le câble de compteur du véhicule et déclenchant la coupure du courant, et enfin comprenant pour escamoter le verrou en marche arrière un relai (30) branché sur la commande d'un phare de recul (40) qui coupe automatiquement l'alimentation de l'électroaimant (31) lors de la mise en marche arrière.

2. Dispositif selon la revendication 1, caractérisé en ce que la cloche (8) présente, entre ses bossages intérieurs (26) des secteurs angulaires creux (25) adaptés pour recevoir avec jeu des galets (24) encastrés dans des logements (23) correspondants de la cage (12) dans laquelle l'arbre mené (2b) est monté coaxialement de façon que lorsque les galets (24) sont dans ces creux (25), un jeu soit créé entre la cage (12) d'une part, la cloche (8) et l'arbre mené (2b) d'autre part, ce dernier étant donc alors désaccouplé de l'arbre menant (2a) tandis que lorsque les galets (24) viennent en butée contre les bossages (26) dans l'un ou l'autre sens de rotation, la cage (12) entraînée par l'arbre mené (2b) vient en butée contre la cloche (8) et réaccouple en rotation l'arbre mené (2b) et l'arbre menant (2a).

3. Dispositif selon la revendication 2, caractérisé en ce que la cage (12) présente un trou (29) de réception du verrou coulissant (27) agencé de telle sorte que lorsque ce dernier est engagé dans le trou (29) et que l'arbre menant (2a) tourne moins vite que l'arbre mené (2b), le véhicule étant par ailleurs en marche avant, ledit verrou (27) bloque la cage (12) et les galets (24) en rotation en maintenant ces derniers dans les creux (25), l'arbre mené (2b) étant alors fou et la roue associée étant libre.

4. Dispositif selon l'une des revendications 2 et 3, caractérisé en ce que le verrou est une tige (27) logée à l'intérieur de la cloche (8) parallèlement à l'axe des arbres menant (2a) et mené (2b), de façon à pouvoir s'engager dans un trou oblong ménagé dans la cage oscillante (12) sur un secteur angulaire correspondant au débattement angulaire de la cage (12) et des galets (24) entre la position « roue libre » et la position de réaccouplement en rotation des arbres menant (2a) et mené (2b) en marche avant.

**Claims**

1. Device for the control of a safety free wheel coupling adapted to be mounted on a transmission shaft of a motor vehicle between a first driving part (2a) of this shaft and a second driven part (2b) of said shaft driving a wheel (1), comprising means for coupling the driving shaft (2a) and the driven shaft (2b) together in both directions of rotation thereof and for uncoupling the driving shaft (2a) and the driven shaft (2b) in the direction of rotation corresponding to forward travel, comprising a bolt (27) mounted for sliding in a bell-housing (8) integral with the driving shaft (2a), adapted to engage in a cage (12) housed within said bell-housing (8) and capable of oscillating therein between two endmost positions in which it is in abutment against bosses (26) of said bell-housing (8) and locks together in rotation in both directions said driven shaft (2b) and said driving shaft (2a), characterised by means for automatically introducing said bolt (27) into said cage (12) when the vehicle is in forward travel and for maintaining said bolt in a middle position between said two endmost positions when the driver is neither accelerating nor braking, so that said driven shaft (2b) is then uncoupled from said driving shaft (2a) and is then free-wheeling, these means comprising an electromagnet (31) housed in the bell-housing (8) and connected to an electric contact (41) fixed to the brake pedal (36), which ensures the power supply and therefore initiates introduction of said bolt (27) into said cage (12) and holds it there as long as the driver does not press the brake pedal; a safety system for retracting said bolt (27) off said oscillating cage (12) from a predetermined speed, in forward travel, during braking and in reverse travel, which couples said shafts (2a, 2b), this safety system comprising a fly-weight (39) fixed to a support pivoting about a pin (50) integral with the bell-housing (8), said support comprising a pivot arm (35) one end of which is firmly secured to said bolt (27), so as to be able to automatically retract this latter from said cage (12) when, under the effect of the centrifugal force from said predetermined speed, said fly-weight (39) moves away from its initial position while causing the arm (35) to pivot about said pin (50) with a force greater than the opposite direction force exerted on the bolt (27) by said electromagnet (31), and still comprising means (38) for automatically returning said bolt (27) into the retracted position when the vehicle is stopped and when the engine is switched off, for example a spring, or else is equipped with an electronic contact mounted on the speedometer cable of the vehicle and triggering current cut-off, and further comprising a relay (30), in order to retract the bolt in reverse travel, which is connected to the control of a reversing light (42), which automatically cuts off the supply to the electromagnet (31) during reversing of the vehicle.

2. Device according to claim 1, characterised by the fact that the bell-housing (8) has, between its inner bosses (26), angular hollow sectors (25) adapted to receive with play rollers (24) engaged in corresponding housings (23) of said cage (12) in which the driven shaft (2b) is coaxially mounted so that, when said rollers (24) are in said hollows (25), a clearance is created between said cage (12) on the one hand and the bell-housing (8) and the driven shaft (2a) on the other, this latter being therefore then uncoupled from said driving shaft (2a), whereas when said rollers (24) come into abutment against said bosses (26) in one or other direction of rotation, the cage (12) driven by said driven shaft (2b) comes into abutment against the bell-housing (8) and couples said driven shaft (2b) and said driving shaft (2a) together again in rotation.

3. Device according to the claim 2, wherein said cage (12) has a hole (29) for receiving said sliding bolt (27) arranged so that when this latter is engaged in the hole (29) and when the driving shaft (2a) rotates slower than said driven shaft (2b), with the vehicle in forward motion, said bolt (27) locks said cage (12) and said rollers (24) against rotation while maintaining these latter in said hollows (25), said driven shaft (2b) being then disengaged and the associated wheel being free.

4. Device according to one of claims 2 and 3, characterised by the fact that the bolt is a rod (27) housed inside the bell-housing (8), parallel to the axis of said driving and driven shafts (2a, 2b), so as to be engageable in an oblong hole formed in said oscillating cage (12) over an angular sector corresponding to the angular movement of said cage (12) and said rollers (24) between the « free wheel » position and the position for coupling said driving and driven shafts (2a and 2b) together again in rotation in forward travel.

**Patentansprüche**

1. Steuervorrichtung für Sicherheitsfreilaufkupplung zum Anbau an die Antriebswelle eines Kraftfahrzeuges zwischen einem ersten, antreibenden Teil (2a) der Welle und einem zweiten, angetriebenen Teil (2b) der Welle, der ein Rad (1) antreibt, mit Mitteln zum Kuppeln der treibenden Welle (2a) mit der angetriebenen Welle (2b) in beiden Drehrichtungen, und zum Entkuppeln der beiden Wellen (2a, 2b) in der Drehrichtigung für Vorwärtsfahrt, mit einem Sperrorgan (27), das verschiebbar in einer Glocke (8) der treibenden Welle (2a) gelagert ist und in einem in der Glocke (8) untergebrachten Käfig (12) eingreifbar ist und in der Glocke zwischen zwei Grenzstellungen bewegbar ist, in denen es an Einbuchtungen (26) der Glocke (8) anliegt und die beiden Wellen (2a, 2b) drehschlüssig in beiden Drehrichtungen verbindet, gekennzeichnet durch Mittel zum automatischen Einführen des Sperrorgans (27) in den Käfig (12) bei Vorwärtsfahrt und zum Festhalten des Sperrorgans in Mittelstellung zwischen den beiden genannten Endstellungen, wenn der Fahrer weder beschleunigt noch bremst, wobei die angetriebene Welle (2b) von der treibenden Welle (2a) getrennt wird und Freilauf herrscht, wobei die genannten Mittel einen Elektromagneten (31) aufweisen, der in der Glocke angeordnet ist und mit einem am Bremspedal (36) befestigten elektrischen Kontakt (41) verbunden ist, welcher die Energiezufuhr zum Magneten herstellt und die Einführung des Sperrorgans (27) in den Käfig (12) und das Festhalten darin bewirkt, solange der Fahrer nicht auf das Bremspedal tritt, und durch ein Sicherheitssystem zum automatischen Ausziehen des Sperrorgans (27) aus dem schwingenden Käfig (12) bei Ueberschreiten einer vorgegebenen Vorwärtsgeschwindigkeit, beim Bremsen und im Rückwärtsgang unter Wiedereinkupplung der genannten Wellen (2a, 2b), wobei das Sicherheitssystem einerseits eine Schwungmasse (39) aufweist, die an einem Gelenkarm befestigt ist, der um eine an der Glocke (8) befestigte Achse (50) drehbar ist, und einen Schwenkarm (35) aufweist, dessen freies Ende mit dem Sperrorgan (27) zusammenwirkt, derart, dass es automatisch aus dem Käfig (12) herausgezogen wird, wenn infolge der Zentrifugalkraft über der vorgegebenen Geschwindigkeit die Schwungmasse (39) die Ausgangslage verlässt und den Arm (35) über die Achse (50) gegen die Kraft des Elektromagneten (31) verschwenkt, und andererseits ein Organ (38), insbesondere eine Feder, zum automatischen Zurückholen des Sperrorgans (27) in die ausgezogene Stellung aufweist, wenn das Fahrzeug steht und der Kontakt abgeschaltet ist, oder einen am Tachometerkabel angebrachten elektronischen Kontakt besitzt, der die Stromversorgung unterbricht, und schliesslich zum Ausziehen des Sperrorgans im Rückwärtsgang ein Relais (30) besitzt, das mit der Speisung eines Rückfahrscheinwerfers (12) verbunden ist und die Speisung des Elektromagneten (31) beim Einlegen des Rückwärtsgangs unterbricht.

2. Vorrichtung nach Anspruch 1, dadurch gekennzeichnet, dass die Glocke (8) zwischen ihren Einbuchtungen (26) ausgebuchtete Sektoren (25) aufweist, die so ausgebildet sind, dass sie mit Spiel Rollkörper (24), die in entsprechenden Ausnehmungen des Käfigs (12) liegen, aufnehmen können, wobei die getriebende Welle (2b) koaxial im Käfig befestigt ist, derart, dass beim Liegen der Rollkörper (24) in den Ausbuchtungen (25) sich ein Spiel zwischen dem Käfig (12) einerseits und der Glocke (8) und der getriebenen Welle (2b) andererseits einstellt, wobei letztere vor der treibenden Welle (2a) abgekuppelt wird, und dass beim Angreifen der Rollkörper (24) an den Einbuchtungen (26) in der einen oder anderen Drehrichtung der Käfig (12) mit der getriebenen Welle (2b) an der Glocke (8) anliegt und die getriebene Welle drehschlüssig mit der treibenden Welle (2a) verbindet.

3. Vorrichtung nach Anspruch 2, dadurch gekennzeichnet, dass der Käfig (12) eine Oeffnung (29) für das Sperrorgan (27) aufweist, die so ausgebildet ist, dass bei eingeführtem Sperrorgan und geringerer Drehzahl der treibenden Welle (2a) als der getriebenen Welle (2b) und im Vorwärtsgang das Sperrorgan (27) den Käfig (12) und die Rollkörper (24) in der Rotation blockiert und letztere in den Ausbuchtungen (25) hält, wobei Freilauf herrscht.

4. Vorrichtung nach Anspruch 2 oder 3, dadurch gekennzeichnet, dass das Sperrorgan ein Stift (27) ist, der im Inneren der Glocke (8) parallel zur Achse der treibenden (2a) und getriebenen (2b) Welle gelagert ist, derart, dass er in eine winkelmässige Langlochbohrung im Schwingkäfig (12) eintreten kann, wobei der Winkel, den das Langloch überstreicht, der Winkelverschiebung des Käfigs (12) mit den Rollkörpern (24) zwischen der Freilaufstellung und der Kupplungstellung der treibenden (2a) und getriebenen (2b) Welle im Vorwärtsgang entspricht.

Fig:1

Fig:4

0 101 691

Fig:2

Fig:3

0 101 691

Fig. 6

Fig. 5